# EUROPEAN PATENT SPECIFICATION

(11) **EP 3 059 105 B1**
(45) Date of publication and mention of the grant of the patent: **22.08.2018**
(21) Application number: 13895747.7
(22) Date of filing: 18.10.2013
(51) Int. Cl.: B60H 1/00, B61D 27/00, B61D 17/12

(54) **MOVING VEHICLE**
BEWEGTES FAHRZEUG
VÉHICULE EN MOUVEMENT

(43) Date of publication of application: 24.08.2016
(73) Proprietor: Hitachi, Ltd., Chiyoda-ku Tokyo 100-8280 (JP)
(72) Inventor: WATANABE, Tohru, Tokyo 100-8280 (JP); HAYASHI, Tomoo, Tokyo 100-8280 (JP); YAMAMOTO, Takahisa, Tokyo 100-8280 (JP); OHBA, Hideshi, Tokyo 100-8280 (JP)
(74) Representative: Gill, Stephen Charles
(86) International application number: PCT/JP2013/078336
(87) International publication number: WO 2015/056347

(56) References cited:
- JP-A- H04 334 654
- JP-A- 2013 151 224
- JP-A- 2013 151 224
- JP-U- H0 636 913
- JP-U- S6 053 667
- JP-U- S6 053 667
- JP-U- S60 191 521
- US-A- 2 902 918
- US-A- 4 352 323
- US-A1- 2003 173 056

## Description

### Technical Field

The present invention relates to a mobile vehicle, and in particular to a mobile vehicle including a vehicle air-conditioning duct that improves the comfort inside a vehicle .

### Background Art

For improving the comfort inside a vehicle, it is important to reduce variation in temperature among areas inside the vehicle . In Europe, in particular, standards relating to the comfort inside vehicles define allowable temperature variations (temperature distributions) and wind speed inside vehicles. The temperature (humidity) inside a vehicle is generally controlled by an air conditioner.

Air whose temperature (humidity) has been controlled by a vehicle air conditioner (conditioned air) is delivered to respective areas in the vehicle by distribution ducts (hereinafter referred to as ducts) disposed in the ceiling and other parts in the vehicle, and then supplied to the inside of the vehicle through outlets connected with the ducts. Since the variation in temperature (temperature distribution) inside a vehicle changes with the air flow rate (supply) and the temperature of conditioned air expelled through the outlets, the air flow rate of the conditioned air, in particular, needs to be optimally controlled so as to improve the comfort inside the vehicle.

Examples of methods for controlling conditioned air includes a method of adjusting the size of an opening between a main duct and a plenum chamber (sub-duct) as disclosed in JP H04-334654 and a method of inserting an air flow rate controlling member, which is provided in the vertical direction of a vehicle along the left-right direction of the vehicle, into a duct as disclosed in JP 2012-6529. Both of the methods disclosed in JP H04-334654 and JP 2012-6529 employ systems in which a member for controlling the air flow rate of conditioned air is provided inside a duct.

### Citation List

### Patent Literatures

Japanese Patent Application Laid-Open No. H04-334654
Japanese Patent Application Laid-Open No. 2012-6529
JP 2013 151224 A proposes an air conditioning duct in a railway vehicle passenger car.
US 2 902 918 discloses an air conditioning duct with plates to adjust the whole air flow in to the passenger space.
US 4 352 322 discloses an air conditioning duct comprising an horizontal plate in order to adjust the whole air prior at the supply port.

### Summary of Invention

### Technical Problem

In the systems in which a part for controlling the air flow rate is provided inside a duct, however, as disclosed in JP H04-334654 and JP 2012-6529, most of ducts, a ceiling panel, etc., need to be detached from a vehicle body for readjustment of the air flow rate of conditioned air, which results in low workability. If an air flow rate adjusting part does not function as intended and needs readjustment, for example, a duct has to be detached from the vehicle body again and the air flow rate then needs to be adjusted again. The air flow rate adjustment work is thus a time-consuming work.

An object of the present invention is to provide a mobile vehicle capable of reducing variation in temperature distribution inside a vehicle compartment and readily adjusting the air flow rate of conditioned air supplied from an air-conditioning duct into the vehicle compartment.

### Solution to Problem

To achieve the aforementioned object, a mobile vehicle according to claim 1 is provided.

### Advantageous Effects of Invention

According to the present invention, variation in temperature distribution inside a vehicle compartment can be reduced and the air flow rate of conditioned air supplied from an air-conditioning duct into the vehicle compartment can be readily adjusted.

### Brief Description of Drawings

[FIG. 1] FIG. 1 is a vertical sectional view of a mobile vehicle illustrating a first comparative example.
[FIG. 2] FIG. 2 is an enlarged sectional view of a main part of a vehicle housing according to the first comparative example.
[FIG. 3] FIG. 3 is an enlarged sectional view of a main part of an air passage according to the first comparative example .
[FIG. 4] FIG. 4 is a conceptual diagram for explaining the flow of conditioned air in the mobile vehicle according to the first comparative example.
[FIG. 5] FIG. 5 is an enlarged sectional view of a main part of an air passage illustrating a second comparative example of a mobile vehicle
[FIG. 6] FIG. 6 is an enlarged sectional view of a main part of an air passage illustrating an embodiment of a mobile vehicle according to the present invention.
[FIG. 7] FIG. 7 is an enlarged sectional view of a main part of an air passage illustrating a third comparative example of a mobile vehicle.
[FIG. 8] FIG. 8 is an enlarged sectional view of a main part of an air passage illustrating a fourth comparative example of a mobile vehicle.

### Description of Embodiment and Comparative Examples

An embodiment of a mobile vehicle according to the present invention and Comparative Examples will hereinafter be described with reference to the drawings. A mobile vehicle according to the present invention refers to a vehicle for passenger transportation such as a railroad vehicle, a streetcar, a monorail car, a vehicle of a new transportation system, and a bus. The mobile vehicle has such a structural characteristic as being larger in the size in the longitudinal direction than that in the width direction.

### First Comparative Example

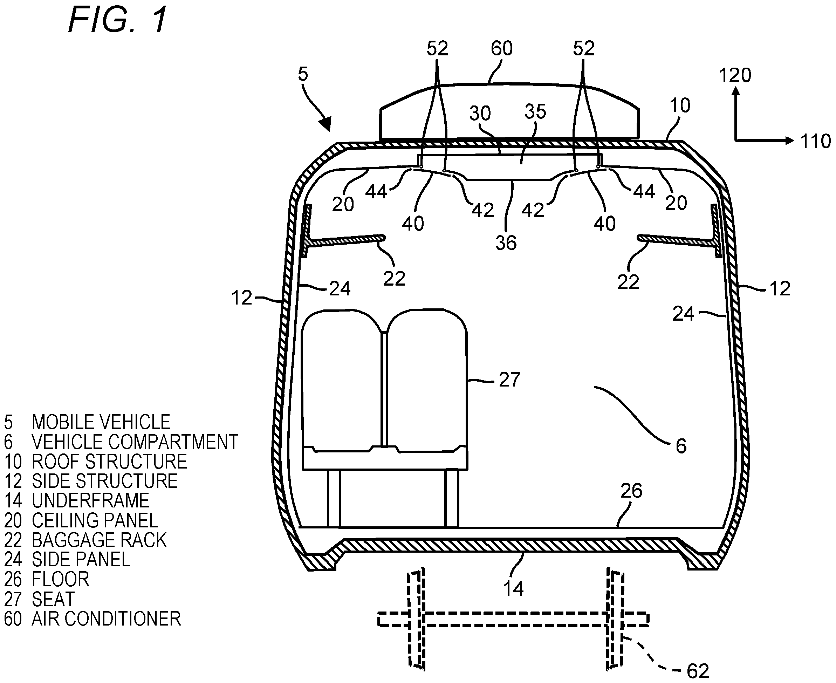

FIG. 1 is a vertical sectional view of a mobile vehicle illustrating a first comparative example (a cross-sectional view taken along a cross section of the mobile vehicle in the longitudinal direction thereof). In FIG. 1, a mobile vehicle 5 includes a roof structure 10, a pair of side structures 12, and an underframe 14, in which the roof structure 10, the pair of side structures 12, and the underframe 14 are integrated to constitute a substantially cylindrical vehicle housing. The vehicle housing is in a form of a cylinder that is larger in the size in the longitudinal direction (front-back direction) of the mobile vehicle 5 than that in the width direction thereof. The roof structure 10 and the underframe 14 are disposed along an horizontal (width) direction 110, the side structures 12 are disposed along a vertical (height) direction 120, an air conditioner 60 is disposed on an upper side of the roof structure 10, and a pair of wheels 62 are disposed on a lower side of the underframe 14.

In the inside of the vehicle housing, a ceiling panel 20 is disposed on an upper side, a pair of side panels are disposed on side face sides, a floor 26 is disposed on a lower side, and the ceiling panel 20, the pair of side panels 24 and the floor 26 are integrated to constitute a substantially cylindrical vehicle compartment. The vehicle compartment is in a form of a cylinder that is larger in the size in the longitudinal direction (front-back direction) of the mobile vehicle 5 than that in the width direction thereof. The ceiling panel 20 and the floor 26 are disposed along the horizontal direction 110, the side panels 24 are disposed substantially along the vertical direction 120, baggage racks 22 are disposed on inner wall surfaces on upper sides of the respective side panels 24, and seats 27 are fixed onto the floor 26. The baggage racks 22 are not mesh members but are racks being made of plate members that block passage of air and have L-shaped cross-sections.

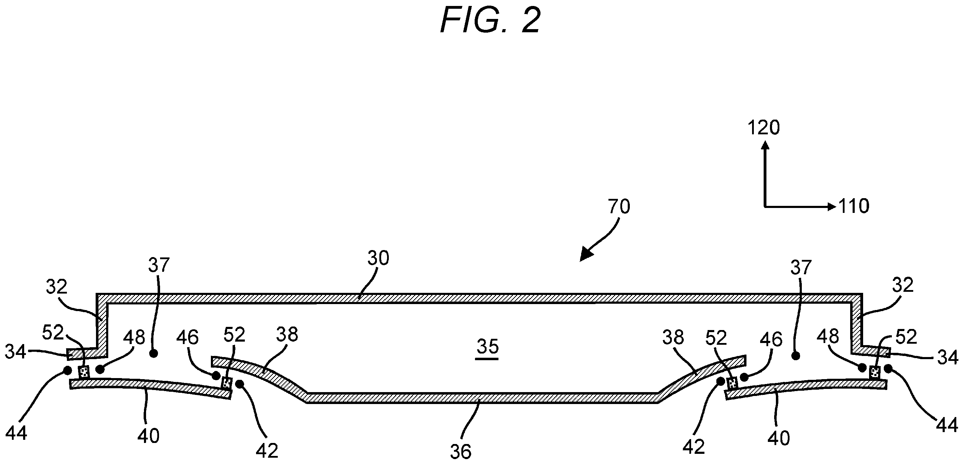

In a middle part of the air conditioning ceiling panel 20 in the width direction, an air-conditioning duct 70 (see FIG. 2) through which conditioned air whose temperature, etc., has been controlled by the air conditioner 60 is supplied to respective areas in the mobile vehicle 5 is disposed along the longitudinal direction of the mobile vehicle 5. The air-conditioning duct having a rectangular shape includes a upper plate 30 and a lower plate 36 disposed opposite to the upper plate 30. The lower plate 36 has a size in the width direction set to be smaller than that of the upper plate 30, and the upper plate 30 and the lower plate 36 are coupled with each other with a plurality of supports (not illustrated) arranged at regular intervals along the longitudinal direction (front-back direction) of the mobile vehicle 5. The lower plate 36 of the air-conditioning duct constitutes part of the ceiling panel 20.

Although an example in which the air conditioner 60 is installed on a roof of the mobile vehicle 5 is illustrated in FIG. 1, the air conditioner 60 may be provided under the under frame 14. In this case, an air-conditioning duct extending in the vertical direction from the air conditioner 60 installed under the underframe 14 can be raised and connected to the air-conditioning duct 70 provided on the ceiling, so that a structure in which conditioned air conditioned by the air conditioner 60 is distributed in the longitudinal direction of the mobile vehicle 5 from the upper side (ceiling) of the mobile vehicle 5 can be obtained, similarly to the case in which the air conditioner 60 is installed on the roof structure 10 of the mobile vehicle 5.

FIG. 2 is an enlarged sectional view of a main part of the vehicle housing. In FIG. 2, the air-conditioning duct 70 serves the functions of delivering conditioned air conditioned by the air conditioner 60 in the longitudinal direction and the width direction of the mobile vehicle 5 and supplying the conditioned air to respective areas in the vehicle compartment 6. The air-conditioning duct 70 thus includes an air passage 35 through which conditioned air is conveyed, and a pair of supply ports 37 through which the conditioned air is supplied toward the vehicle compartment 6 of the mobile vehicle 5 at lower positions on both sides of the air passage 35 in the width direction 110. Each of the supply ports 37 is provided with a closing plate 40 for covering the supply port 37 with a space left between the supply ports 37 and the air-conditioning duct. Alternatively, supply ports 37 may include a plurality of pairs of supply ports 37, the supply ports 37 of each pair may be arranged on both sides of the lower plate 36, and the supply ports 37 of the pairs may be arranged along the longitudinal direction of the mobile vehicle 5 at regular intervals.

At each of the ends, in the width direction of the mobile vehicle 5, of the upper plate 30 that is part of the air-conditioning duct 70, a vertical piece 32 extending from the upper plate 30 along the vertical direction 120 and a horizontal piece 34 disposed from a lower end of the vertical piece 32 along the horizontal direction 110 (in a direction opposite to middle part of the mobile vehicle 5 in the width direction) are provided. The vertical piece 32 and the horizontal piece 34 may be integrally formed in a continuous shape from the upper plate 30 by bending of a plate or the like, or the vertical piece 32 may be formed in a curved shape and the upper plate, the curved shape and the horizontal piece 34 may be provided integrally. At each of the ends of the lower plate 36 in the width direction 110, a curved portion 38 that is curved in a convex shape toward the upper plate 30 is formed integrally with the lower plate 36.

The closing plate 40 is disposed in such a manner that both ends of the closing plate 40 in the width direction 110 cover the horizontal piece 34 and the curved portion 38 with spaces left between the closing plate 40 and the horizontal piece 34 and between the closing plate 40 and the curved portion 38. In this case, diverging flow passages 46 and 48 for dividing conditioned air exhausted through the supply port 37 along the width direction of the mobile vehicle 5 are formed between each of the supply ports 37 and the closing plate 40 covering the supply port 37 and the air-conditioning duct continuous with the supply port 37, the diverging flow passages 46 and 48 are provided with outlets 42 and 44, respectively, through which the conditioned air in the diverging flow passage is expelled into the vehicle compartment 6 of the mobile vehicle 5, and shields 52 for adjusting the air flow rate of the conditioned air to be expelled are disposed in the diverging flow passages 46 and 48.

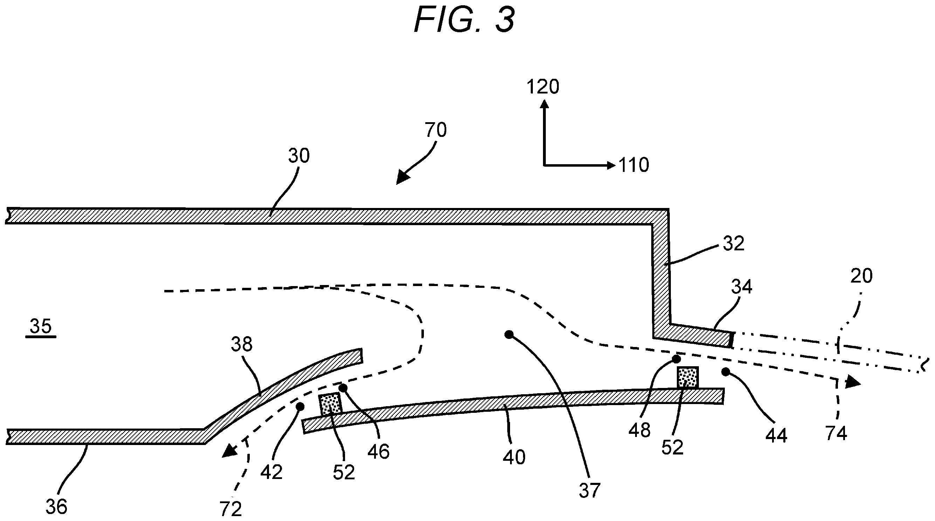

FIG. 3 is an enlarged sectional view of a main part of the air passage. The closing plate 40 has one end in the width direction thereof covering the horizontal piece 34 and another end in the width direction thereof covering the curved portion 38, with predetermined spaces between the horizontal piece 34 and the closing plate 40 and between the curved portion 38 and the closing plate 40. The closing plate 40 and the horizontal piece 34 form the diverging flow passage 48 and the outlet 44 through which the conditioned air is supplied along the ceiling panel 20 toward the side panel 24, and the closing plate 40 and the curved portion 38 similarly form the diverging flow passage 46 and the outlet 42 through which the conditioned air is supplied toward the middle part in the width direction of the mobile vehicle 5. Note that these structures are plane-symmetric with respect to a central cross-section in the width direction of the mobile vehicle 5.

Specifically, the vertical piece 34, which is part of the upper plate 30, the curved portion 38, which is part of the lower plate 36, and the closing plate 40 disposed for covering from below form the diverging flow passages 46 and 48 along the width direction 110, so that two flows along the width direction 110 of the conditioned air toward the middle part of the vehicle body and toward an end in the width direction of the vehicle body (four flows in total in the entire vehicle body width direction) are formed.

The shields 52, which are air flow rate controlling members for controlling the air flow rate of conditioned air passing through the diverging flow passages 46 and 48, are disposed in the diverging flow passages 46 and 48. The shields 52 are disposed in the diverging flow passages 46 and 48 along the longitudinal direction of the mobile vehicle 5, and the shields 52 are disposed on the closing plate 40, the horizontal piece 34, or the curved plate 38.

For supplying conditioned air toward the middle part in the width direction of the mobile vehicle 5 and also positively obtain a downward flow thereof, a curved portion 38 extending upward is provided. The description on the curved portion 38 is applicable to the embodiment and comparative examples below.

In this case, a flow 72 of conditioned air is formed in the air passage 35 and the diverging flow passage 46, and a flow 74 of conditioned air is formed in the air passage 35 and the diverging flow passage 48. The air flow rates of the flows 72 and 74 of the conditioned air are controlled according to the states of the shields 52, such as the shapes and the sizes (heights) of the shields 52. Specifically, by detaching a closing plate 40 from the air-conditioning duct 70 and adjusting the states of the shields 52 by operations from the inside of the vehicle, the fluid resistances in the diverging flow passages 46 and 48 can be changed, and in this manner, the air flow rates of conditioned air passing through the diverging flow passages 46 and 48 can be readily adjusted. The shields 52 may be made of such a material as sponge that is easily processed. The shields 52 may also have sound absorbing properties. The shields 52 made of a sound absorbing material enables noise caused by the flow of conditioned air expelled from the air conditioner 60 through the air-conditioning duct to be reduced through the outlets 42 and 44.

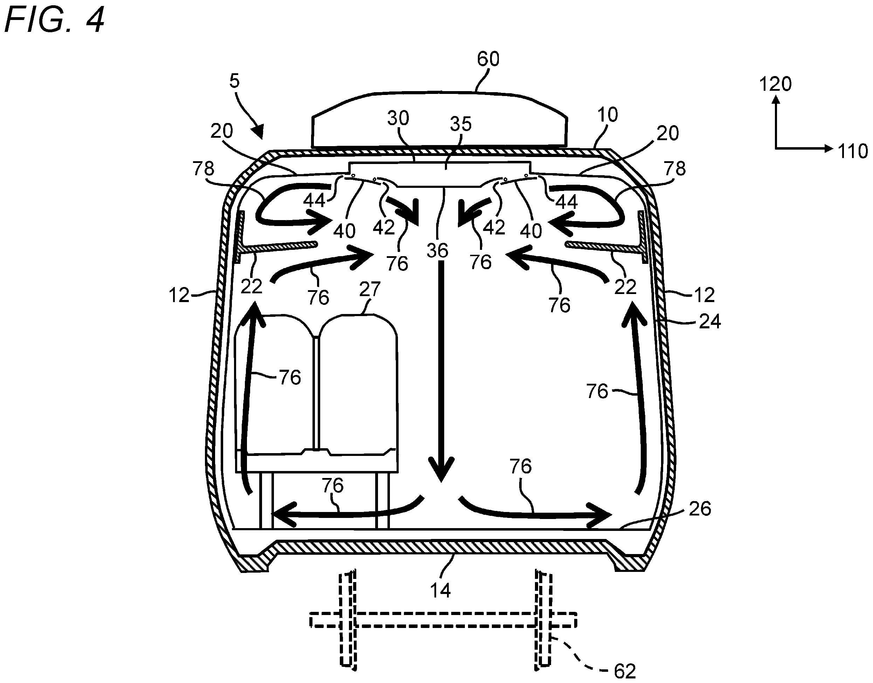

FIG. 4 is a conceptual diagram for explaining the flow of conditioned air in the mobile vehicle according to the first comparative example. In FIG. 4, the conditioned air conditioned by the air conditioner 60 is introduced into the air-conditioning duct 70 (air passage 35) disposed at the middle part in the width direction on the upper side in the mobile vehicle 5 via a duct (not illustrated) continuous with the air passage 35. The conditioned air introduced into the air passage 35 is supplied through the supply ports 37 formed at both ends in the width direction of the air-conditioning duct 70 via the diverging flow passages 46 and 48 into the vehicle compartment 6 through the outlets 42 and 44 at respective parts in the longitudinal direction of the mobile vehicle 5 along the air-conditioning duct 70.

The conditioned air expelled through the outlets 42 into the vehicle compartment 6 toward the center in the width direction of the mobile vehicle 5 flows through an area below the lower plate 36 toward the center in the width direction of the mobile vehicle 5, and at around the center in the width direction of the mobile vehicle 5, then flows toward the floor 26. The conditioned air hitting the floor 26 separates toward the left and right side panels 24. The respective separated flows of conditioned air pass by the floor 26 and are directed to the side panels 24, hit the panels 24, and then become flows directed upward in the vertical direction 120 of the mobile vehicle 5 passing along the side panels 24 toward the baggage racks 22. The conditioned air hitting the baggage racks 22 then flows through areas under the baggage racks 22 toward the center in the width direction of the mobile vehicle 5. In this case, lower flows 76 are formed in the vehicle compartment 6 of the mobile vehicle 5 by the conditioned air expelled into the vehicle compartment 6 through the outlets 42.

The conditioned air expelled through the outlets 44 into the vehicle compartment 6 toward the respective corners in the width direction of the mobile vehicle 5 flows through areas below the ceiling panel 20 in directions away from the center in the width direction of the mobile vehicle 5 toward the left and right side panels 24, hits the side panels 24, and then flows along the side panels 24 downward in the vertical direction 120 of the mobile vehicle 5 toward the baggage racks 22. Thereafter, the conditioned air hits the baggage racks 22, and then flows through areas above the baggage racks 22 toward the center in the width direction of the mobile vehicle 5. In this case, upper flows 78 are formed in the vehicle compartment 6 of the mobile vehicle 5 by the conditioned air expelled into the vehicle compartment 6 through the outlets 44.

Since the directions in which the conditioned air expelled through the outlets 42 and 44 into the vehicle compartment 6 are not downward in the vertical direction 120 but are along the ceiling panel 20 as described above, the distance by which the conditioned air expelled through the outlets 42 and 44 flows down until the conditioned air reaches to a lower area of the vehicle compartment 6 becomes longer, which makes the wind speed of the conditioned air lower and reduces drafts felt by passengers . Furthermore, since the air in the vehicle is mixed while the conditioned air passes a long distance, temperature distribution with low temperature variation can be obtained.

If the air flow rate of conditioned air expelled into the vehicle compartment 6 through the outlets 42 and 44 is too high at a certain area in the mobile vehicle 5, the air flow rates of the conditioned air passing through the diverging flow passages 46 and 48 only need to be lowered. Conversely, if the air flow rate of conditioned air is too low, the air flow rates of the conditioned air passing through the diverging flow passages 46 and 48 only need to be increased. The air flow rates of the conditioned air can be adjusted by changing the sizes and the shapes of the shields 52 disposed in the diverging flow passages 46 and 48. In this case, the sizes and the shapes of the shields 52 disposed in the diverging flow passages 46 and 48 can be changed independently of each other.

As a result of expelling the conditioned air through the outlets 42 and 44 continuous with the diverging flow passages 46 and 48, respectively, the conditioned air expelled through the outlets 42 mainly circulates in the entire lower area surrounded by the baggage racks 22, the side panels 24 and the floor 26 in the vehicle compartment 6 and forms the lower flows 76 while the conditioned air expelled through the outlets 44 mainly circulates in the entire upper area surrounded by the ceiling panel 20 and the baggage racks 22 in the vehicle compartment 6 and forms the upper flows 78, which makes the variation in temperature in vehicle compartment 6 smaller.

According to the present comparative example, variation in temperature distribution inside the vehicle compartment can be reduced and the air flow rates of conditioned air supplied from the air-conditioning duct into the vehicle compartment can be readily adjusted. Furthermore, according to the present comparative example, a comfortable environment in a vehicle where the wind speed is low can be provided, and the number of processes for adjusting the air flow rate can be reduced since the air flow rate of conditioned air can be readily adjusted.

### Second Comparative Example

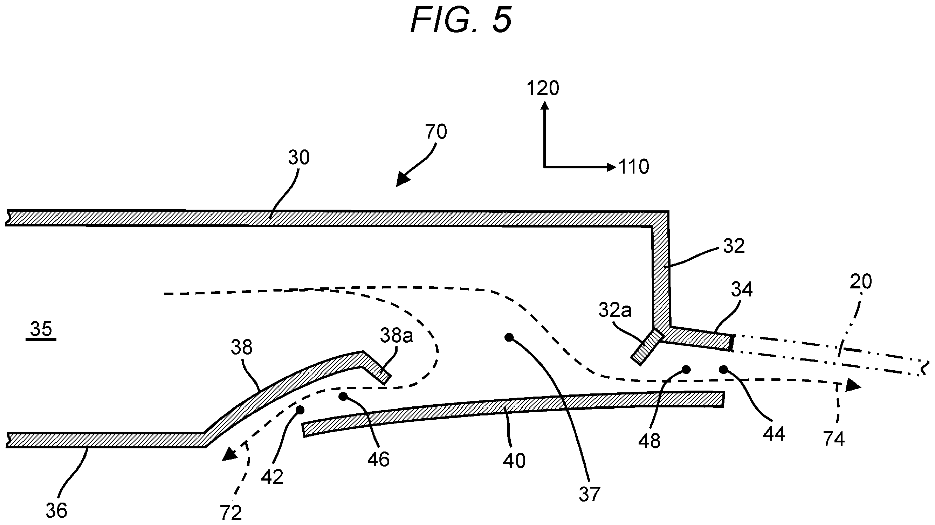

FIG. 5 is an enlarged sectional view of a main part of an air passage illustrating a second comparative example of a mobile vehicle. As illustrated in FIG. 5, the present comparative example includes a bent portion 38a, which is an air flow rate controlling member, formed at an end in the width direction of the curved portion 38 of the lower plate 36, for adjusting the air flow rate of the conditioned air passing through the supply port 37 and the diverging flow passage 46 instead of the shields 52 disposed on the closing plate 40, and includes an auxiliary vertical piece 32a, which is an air flow rate controlling member, provided on the vertical piece 32 of the upper plate 30, for adjusting the air flow rate of the conditioned air passing through the supply port 37 and the diverging flow passage 48. The other structures are the same as those in the first comparative example.

Since the bent portion 38a is formed in a form of a protruding piece bent into the diverging flow passage 46 from the supply port 37, which is an end in the width direction of the curved portion 38 of the lower plate 36, along the longitudinal direction of the mobile vehicle 5, and since the fluid resistance in the diverging flow passage 46 changes with the form of the bent portion 38a, such as the bending angle thereof, the air flow rate of the conditioned air passing through the supply port 37 and the diverging flow passage 46 can be readily adjusted. The auxiliary vertical piece 32a is formed in the form of a protruding piece protruding into the diverging flow passage 48 from the supply port 37 under the vertical piece 32 of the upper plate 30 along the longitudinal direction of the mobile vehicle 5, and fixed at the supply port 37 under the vertical piece 32 of the upper plate 30. Since the fluid resistance in the diverging flow passage 48 changes with the form of the auxiliary vertical piece 32a, such as the size and the shape thereof, the air flow rate of the conditioned air passing through the supply port 37 and the diverging flow passage 48 can be readily adjusted.

In this process, the space between the bent portion 38a and the closing plate 40 (the diameter of the diverging flow passage 46) can be adjusted with the bending amount of the bent portion 38a. The space between the auxiliary vertical piece 32a and the closing plate 40 (the diameter of the diverging flow passage 48) can be adjusted with the length of the auxiliary vertical piece 32a. Note that the bent portion 38amay be formed as a member separate from the curved portion 38 instead of being formed integrally with the curved portion 38.

According to the present comparative example, the same effects as those of the first comparative example can be produced, and since no complicated adjustment mechanism is present, the number of required parts can be reduced and the cost can be reduced. Embodiment according to the present invention.

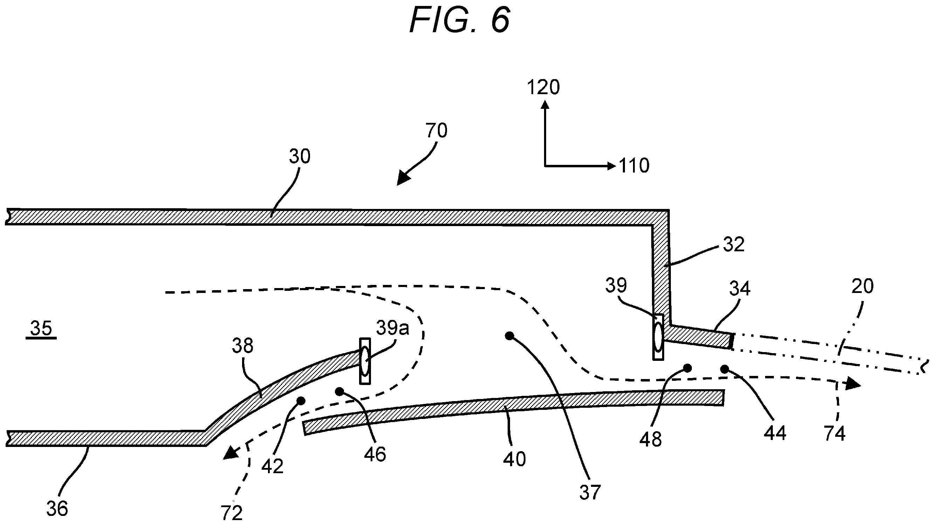

FIG. 6 is an enlarged sectional view of a main part of an air passage illustrating an embodiment of a mobile vehicle according to the present invention. As illustrated in FIG. 6, the present embodiment includes an air flow rate adjusting plate 39, which is an air flow rate controlling member, movably fixed to an end in the width direction of the curved portion 38 of the lower plate 36, for adjusting the air flow rate of the conditioned air passing through the supply port 37 and the diverging flow passage 46 instead of the shields 52 disposed on the closing plate 40, and includes an air flow rate adjusting plate 39, which is an air flow rate controlling member, movably fixed to the vertical piece 32 of the upper plate 30, for adjusting the air flow rate of the conditioned air passing through the supply port 37 and the diverging flow passage 48. The other structures are the same as those in the first comparative example .

The air flow rate adjusting plates 39 are formed in a substantially rectangular parallelpiped shape with the longitudinal direction thereof extending along the longitudinal direction of the mobile vehicle 5, and disposed at an end of the curved portion 38 and near the vertical piece 32 of the horizontal piece 34 in such a manner that the air flow rate adjusting plates 39 are movable along the direction intersecting with the diameter of the supply port 37 (height direction) . The air flow rate adjusting plates 39 have slots 39a open in the height direction, and are fixed by fastening members, such as screws (not illustrated) inserted in the slots 39a. In this case, the screws inserted in the slots 39a can be unfastened so that the fixing positions of the air flow rate adjusting plates 39 can be determined along the direction intersecting with the diameter of the supply port 37 (vertical direction 120).

Since the fluid resistance in the diverging flow passage 46 can be adjusted by fixing the air flow rate adjusting plate 39 at the supply port 37 at the end in the width direction of the curved portion 38 of the lower plate 36, the air flow rate of the conditioned air passing through the supply port 37 and the diverging flow passage 46 can be readily adjusted. Specifically, the space between the air flow rate adjusting plate 39 fixed at the supply port 37 at the end in the width direction of the curved portion 38 and the closing plate 40 (the diameter of part of the diverging flow passage 46) can be adjusted by the fastening position of the air flow rate adjusting plate 39 and the screw inserted in the slot 39a, and the air flow rate of the conditioned air passing through the supply port 37 and the diverging flow passage 46 can be readily adjusted.

Furthermore, since the fluid resistance in the diverging flow passage 48 can be adjusted by fixing the air flow rate adjusting plate 39 at the supply port 37 under the vertical piece 32 of the upper plate 30, the air flow rate of the conditioned air passing through the supply port 37 and the diverging flow passage 48 can be readily adjusted. Specifically, the space between the air flow rate adjusting plate 39 fixed at the supply port 37 under the vertical piece 32 and the closing plate 40 (the diameter of part of the diverging flow passage 48) can be adjusted by the fastening position of the air flow rate adjusting plate 39 and the screw inserted in the slot 39a, the air flow rate of the conditioned air passing through the supply port 37 and the diverging flow passage 48 can be readily adjusted.

According to the present embodiment, the same effects as those of the first comparative example can be produced, and since the slots 39a are formed in the air flow rate adjusting plates 39, the spaces between the lower ends of the air flow rate adjusting plates 39 and the closing plate 40 can be adjusted by unfastening the screws (fastening members) and determining the fastening positions, and the air flow rates of the conditioned air passing through the supply port 37 and the diverging flow passages 46 and 48 can be readily adjusted.

### Third Comparative Example

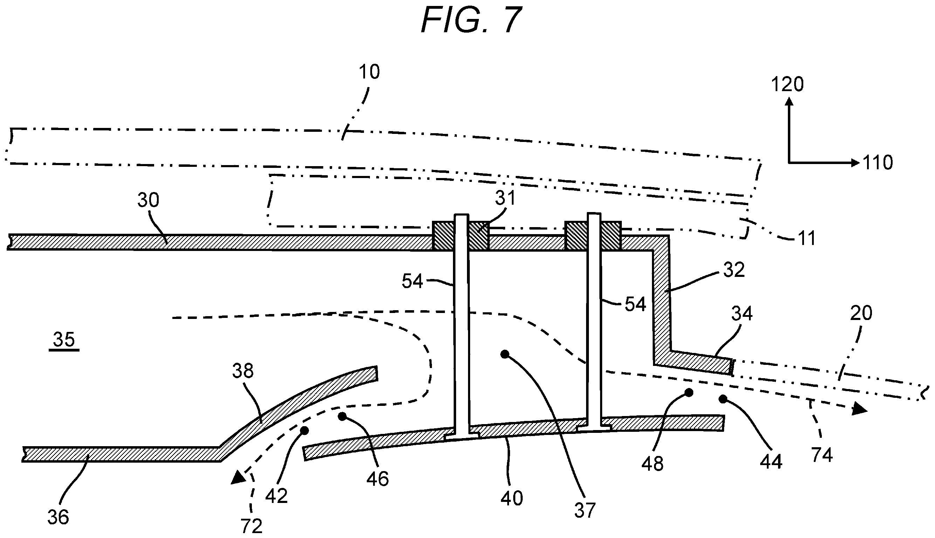

FIG. 7 is an enlarged sectional view of a main part of an air passage illustrating a third comparative example of a mobile vehicle. As illustrated in FIG. 7, the present comparative example includes a plurality of screw seats 31 formed at positions on the upper plate 30 facing the supply port 37 (on an air passage wall surface facing the closing plate 40) and a plurality of supports 54 fixed to the closing plate 40 covering the supply port 37, which are respectively coupled to each other, instead of the shields 52 disposed on the closing plate 40, where the distance between the supply port 37 and the closing plate 40 is adjusted by rotation of the supports 54. The other structures are the same as those in the first comparative example.

The supports 54 are formed in a columnar shape and have screw portions (not illustrated) formed on part of the outer surfaces thereof. Each of the supports 54 has one end in the axial direction fixed to the closing plate 40 and has a screw portion on the other end in the axial direction engaged with the screw seat 31. Specifically, the screw portions of the supports 54 are engaged with the screw seats 31, so that the supports 54 are rotatably coupled to the screw seats 31. In this case, the engagement positions of the supports 54 and the screw seats 31 change with the rotations of the supports 54, and with these engagement positions of the supports 54 and the screw seats 31, the distance between the supply port 37 and the closing plate 40 is adjusted and the diameters of the diverging flow passages 46 and 48 (the space between the curved portion 38 and the closing plate 40 and the space between the horizontal piece 34 and the closing plate 40) are adjusted.

Specifically, a support 54 disposed on the curved portion 38 side among the supports 54 is rotated to change the position of the support 54 and a corresponding screw seat 31, so that the diameter of the diverging flow passage 46 (the space between the curved portion 38 and the closing plate 40) can be adjusted. Alternatively, a support 54 disposed on the horizontal piece 34 side is rotated to change the position of the support 54 and the corresponding screw seat 31, so that the diameter of the diverging flow passage 48 (the space between the horizontal piece 34 and the closing plate 40) can be adjusted.

Furthermore, heat insulating materials 11 are disposed between the roof structure 10 and ceiling panel 20 and between the roof structure 10 and the upper plate 30. The heat insulating materials 11 are made of fiber, no problem is caused when the ends of the supports 54 in the axial direction locally press the heat insulating materials 11.

According to the present comparative example, the same effects as those of the first comparative example can be produced, and since the air flow rates of conditioned air passing through the diverging flow passages 46 and 48 can be adjusted without detachment of parts of the air-conditioning duct, a mobile vehicle 5 having temperature distribution with low variation can be produced through a short-time process.

### Fourth Comparative Example

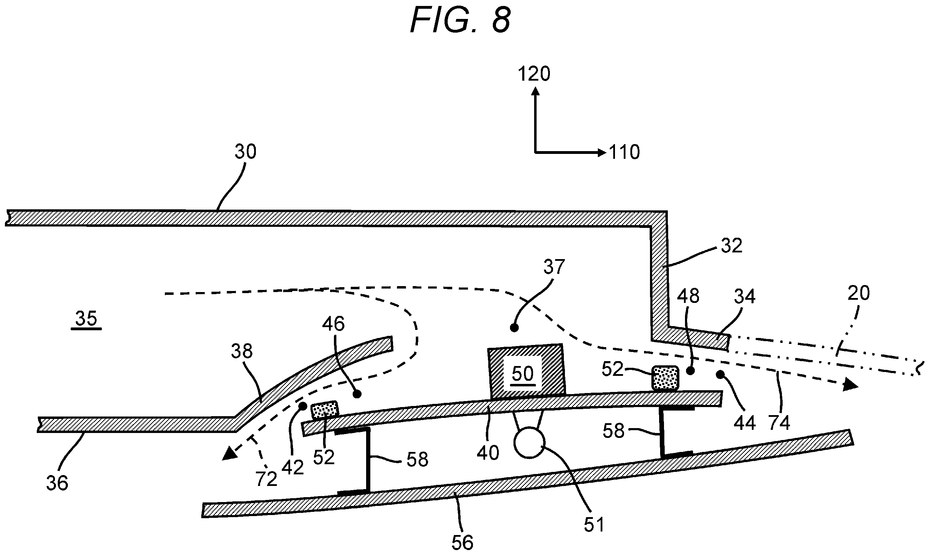

FIG. 8 is an enlarged sectional view of a main part of an air passage illustrating a fourth comparative example of a mobile vehicle. As illustrated in FIG. 8, the present comparative example includes a light power supply 50 disposed on the closing plate 40, a reflector 56 coupled to the closing plate 40 with a plurality of supports 58 therebetween, and an electric light 51 disposed between the closing plate 40 and the reflector 56, so that power from the light power supply 50 is supplied to the electric light 51 and light from the electric light 51 is reflected by the reflector 56 to provide indirect lighting. The other structures are the same as those in the first comparative example.

The light power supply 50 is fixed to a surface, facing the supply port 37, of the closing plate 40 (the upper surface of the closing plate 40). The electric light 51 to which power is supplied by the light power supply 50 is disposed in the middle in the width direction on a rear side (the lower surface of the closing plate 40) of the surface, facing the supply port 37, of the closing plate 40. Furthermore, the reflector 56 disposed on a side closer to the vehicle compartment 6 than the closing plate 40 to cover the closing plate 40 and the electric light 51 and reflect light from the electric light 51 is coupled to the rear surface of the closing plate 40 with a plurality of coupling members, such as rectangular supports 58, therebetween. The reflector 56 is formed of a light reflective member that basically does not transmit light into a size sufficient to cover up the closing plate 40, and disposed below the closing plate 40 and along the longitudinal direction of mobile vehicle 5.

As a result of installing the reflector 56 below the closing plate 40, the shields 52, which are air flow rate controlling members, cannot be seen by passengers in the vehicle compartment 6, which can improve the visual quality of interior parts. Furthermore, as a result of installing the electric light 51 between the closing plate 40 and the reflector 56, indirect lighting is produced, which can improve the design.

According to the present comparative example, the same effects as those of the first comparative example can be produced, and since the electric light 51 is disposed at the center in the width direction of the mobile vehicle 5, the numbers of electric lights 51 and supports 58 can be reduced as compared to a case in which the electric light 51 and the air-conditioning duct are disposed at an end in the width direction of the mobile vehicle 5, which can reduce the cost and the weight of the ducts. Furthermore, if part of the reflector 56 is replaced with a light transmissive material, both indirect lighting and direct lighting can be provided in good balance.

Note that the present invention is not limited to the embodiment described above, but may include various modifications within the scope of the invention as defined in the appended claims. For example, in the embodiment and the first to third comparative examples, the electric light 51 may be disposed on the surface, facing the supply port 37, of the closing plate 40. The embodiment and comparative examples described above provide simple explanation of the present invention.

### Reference Signs List

5 mobile vehicle
6 vehicle compartment
10 roof structure
11 heat insulating material
12 side structure
14 underframe
20 ceiling panel
22 baggage rack
24 side panel
26 floor
27 seat
30 upper plate
31 screw seat
32 vertical piece
32a auxiliary vertical piece
34 horizontal piece
35 air passage
36 lower plate
37 supply port
38 curved portion
38a bent portion
39 air flow rate adjusting plate
40 closing plate
42, 44 outlet
46, 48 diverging flow passage
50 light power supply
51 electric light
52 shield
54 support
56 reflector
58 support
60 air conditioner
62 wheel
70 air-conditioning duct
110 horizontal direction
120 vertical direction

## Claims

1. A mobile vehicle (5) comprising: an air conditioner (60) configured to generate conditioned air, and an air-conditioning duct (70) provided along a longitudinal direction in a ceiling part of the mobile vehicle and configured to circulate the conditioned air, wherein
the air-conditioning duct (70) includes an air passage (35) through which conditioned air is conveyed, a pair of supply ports (37) on both sides of the air passage (35) in a width direction thereof, each supply port supplying the conditioned air to respective diverging flow passages (46, 48), the air-conditioning duct (70) being constituted by an upper plate (30), horizontal pieces (34) provided at both ends in a width direction of the upper plate, a lower plate (36) provided opposite to the upper plate (30), and closing plates (40) each covering respective supply port (37) by overlapping with one of the horizontal (34) and one of ends in the width direction of the lower plate (36) from below with a predetermined space therefrom, and
air flow rate controlling members for adjusting air flow rates of the conditioned air passing through the respective diverging flow passages (46, 48) are provided in the respective diverging flow passages (46, 48), the air flow rate controlling members being constituted by a plurality of air flow rate adjusting plates (39) disposed in corresponding one of the diverging flow passages (46, 48), **characterized in that**:
the mobile vehicle (5) further comprises curved plates (38) curving in a convex shape toward the upper plate (30) at both ends in the width direction of the lower plate (36), the diverging flow passages (46, 48) are constituted by the curved plates, the horizontal pieces, and the closing plates,
each of the air flow rate adjusting plates (39) has a slot (39a) extending in a height direction,
each of the air flow rate adjusting plates (39) is fixed by fastening a fastening member inserted in the slot to the respective diverging flow passage (46, 48), and the air flow rate of the conditioned air passing through each of the diverging flow passages (46, 48) is adjusted by fastening positions of the air flow rate adjusting plates (39) and the fastening members inserted in the slots.

2. The mobile vehicle (5) according to claim 1, wherein a light power supply (50) is disposed on an upper surface of each of the closing plates (40), an electric light (51) to which power is supplied by the light power supply is disposed on a lower surface of the closing plate (40), and a reflector (56) for reflecting light from the electric light is disposed below the closing plate (40) and connected with the closing plate (40) with a coupling member.

## Patentansprüche

1. Mobiles Fahrzeug (5), das Folgendes umfasst: eine Klimaanlage (60), die ausgebildet ist, um klimatisierte Luft zu erzeugen, und einen Klimaanlagekanal (70), der entlang einer Längsrichtung in einem Deckenteil des mobilen Fahrzeugs bereitgestellt ist und ausgebildet ist, um die klimatisierte Luft zu zirkulieren, wobei
der Klimaanlagekanal (70) Folgendes umfasst: einen Luftdurchlass (35), durch den klimatisierte Luft transportiert wird; ein Paar Zufuhröffnungen (37) an beiden Seiten des Luftdurchlasses (35) in einer Breiterichtung davon, wobei jede Zufuhröffnung die klimatisierte Luft in entsprechende divergierende Strömungsdurchlässe (46, 48) zuführt; wobei der Klimaanlagekanal (70) aus Folgendem besteht: einer oberen Platte (30), horizontalen Teilen (34), die in einer Dickerichtung der oberen Platte an beiden Enden bereitgestellt sind; einer unteren Platte (36), die der oberen Platte (30) gegenüberliegend bereitgestellt ist, und Abschließplatten (40), die jeweils eine entsprechende Zufuhröffnungen (37) durch Überlappen mit einem der horizontalen Teile (34) und einem der Enden der unteren Platte (36) in Breiterichtung von unten in einem vorbestimmten Abstand von diesem abdecken,
und Luftströmungsratensteuerelemente zur Anpassung der Luftströmungsraten der klimatisierten Luft, die durch die jeweiligen divergierenden Strömungsdurchlässe (46, 48) strömt, in den jeweiligen divergierenden Strömungsdurchlässen (46, 48) bereitgestellt sind,
wobei die Luftströmungsratensteuerelemente aus einer Vielzahl von Luftströmungsrateneinstellungsplatten (39) bestehen, die in einem entsprechenden der divergierenden Strömungsdurchlässe (46, 48) angeordnet sind,
**dadurch gekennzeichnet, dass**:
das mobile Fahrzeug (5) ferner gekrümmte Platten (38) umfasst, die sich in konvexer Form in Dickerichtung der unteren Platte (36) in Richtung der oberen Platte (30) krümmen,
die divergierenden Strömungsdurchlässe (46, 48) aus den gekrümmten Platten, den horizontalen Teilen und den Abschließplatten bestehen, jede der Luftströmungseinstellungsplatten (39) einen Schlitz (39a) aufweist, der sich in Höhenrichtung erstreckt,
jede der Luftströmungseinstellungsplatten (39) durch Befestigung eines in den Schlitz eingebrachten Befestigungselements an dem jeweiligen Strömungsdurchlass (46, 48) fixiert ist, und
die Luftströmungsrate der klimatisierten Luft, die durch jeden der divergierenden Strömungsdurchlässe (46, 48) hindurchfließt, durch Befestigungspositionen der Luftströmungseinstellungsplatten (39) und der in die Schlitze eingebrachten Befestigungselemente eingestellt wird.

2. Mobiles Fahrzeug (5) nach Anspruch 1, wobei eine Lichtstromversorgung (50) auf einer oberen Oberfläche jeder der Abschließplatten (40) angeordnet ist,
ein elektrisches Licht (51), dem Strom über die Lichtstromversorgung zugeführt wird, auf einer unteren Oberfläche der Abschließplatten (40) angeordnet ist,
und ein Reflektor (56) zur Reflexion von Licht von dem elektrischen Licht unter der Abschließplatte (40) angeordnet ist und mit der Abschließplatte (40) über ein Kopplungselement verbunden ist.

## Revendications

1. Véhicule mobile (5) comprenant : un dispositif de climatisation (60) configuré pour générer de l'air conditionné, et un conduit de climatisation (70) prévu dans une direction longitudinale dans une partie de plafond du véhicule mobile et configuré pour faire circuler l'air climatisé, dans lequel
le conduit de climatisation (70) comprend un passage d'air (35) traversé par de l'air climatisé, une paire d'orifices d'alimentation (37) des deux côtés du passage d'air (35) dans une direction de largeur de celui-ci, chaque orifice d'alimentation fournissant l'air climatisé vers des passages d'écoulement divergents respectifs (46, 48), le conduit de climatisation (70) étant constitué par une plaque supérieure (30),
des pièces horizontales (34) disposées aux deux extrémités dans une direction de largeur de la plaque supérieure, une plaque inférieure (36) prévue à l'opposé de la plaque supérieure (30) et des plaques de fermeture (40) recouvrant chacune un orifice d'alimentation respectif (37) par mise en chevauchement de l'une des pièces horizontales (34) et de l'une des extrémités dans la direction de la largeur de la plaque inférieure (36) à partir du dessous avec un espace prédéterminé à partir de celle-ci, et
des éléments de commande de débit d'écoulement d'air pour ajuster des débits d'écoulement d'air de l'air climatisé passant à travers les passages d'écoulement divergents respectifs (46, 48) sont fournis dans les passages divergents respectifs (46, 48), les éléments de commande de débit d'écoulement d'air étant constitués d'une pluralité de plaques d'ajustement de débit d'écoulement d'air (39) disposées dans un correspondant des passages d'écoulement divergents (46, 48),
**caractérisé en ce que** :
le véhicule mobile (5) comprend en outre des plaques incurvées (38) incurvées en une forme convexe vers la plaque supérieure (30) aux deux extrémités dans la direction de la largeur de la plaque inférieure (36), les passages d'écoulement divergents (46, 48) sont constitués par les plaques incurvées, les pièces horizontales et les plaques de fermeture,
chacune des plaques d'ajustement de débit d'écoulement d'air (39) comporte une fente (39a) s'étendant dans une direction de hauteur, chacune des plaques d'ajustement de débit d'écoulement d'air est fixée en fixant un élément de fixation inséré dans la fente au passage d'écoulement divergent respectif (46, 48), et
le débit d'écoulement d'air de l'air climatisé passant à travers chacun des passages d'écoulement divergents (46, 48) est ajusté par des positions de fixation des plaques d'ajustement de débit d'écoulement d'air (39) et des éléments de fixation insérés dans les fentes.

2. Véhicule mobile (5) selon la revendication 1, dans lequel une alimentation en énergie lumineuse (50) est disposée sur une surface supérieure de chacune des plaques de fermeture (40),
une lumière électrique (51) à laquelle l'énergie est fournie par l'alimentation en énergie lumineuse est disposée sur une surface inférieure de la plaque de fermeture (40), et
un réflecteur (56) pour réfléchir la lumière provenant de la lumière électrique est disposé au-dessous de la plaque de fermeture (40) et relié à la plaque de fermeture (40) à l'aide d'un élément de couplage.
